Europäisches Patentamt

**European Patent Office**

**Office européen des brevets**

(11) Publication number: **0 151 761**
**A2**

(12) # EUROPEAN PATENT APPLICATION

(21) Application number: **84115605.2**

(22) Date of filing: **17.12.84**

(51) Int. Cl.⁴: **G 07 F 5/24**
**H 04 M 17/02**

(30) Priority: **13.01.84 IT 6702984**

(43) Date of publication of application:
**21.08.85 Bulletin 85/34**

(84) Designated Contracting States:
**BE CH DE FR GB LI**

(71) Applicant: **URMET S.p.A. Costruzioni**
**Elettro-Telefoniche**
**Via Bologna 188**
**I-10154 Torino(IT)**

(72) Inventor: **Mondardini, Massimo**
**Via Mazzini, 40**
**I-10100 Torino(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) Electronic coin box, particularly for public telephone utilities.

(57) A coin box is disclosed which comprises a single slot (10) for the introduction of coins of different face values and telephone tokens, and a single gathering raceway (11), electronic means (14) of storing the face value of each coin and related spatial address within the gathering raceway, and electronic means (23) of selectively accepting or returning the coins contained in the raceway and as sorted by an acceptation optimizing program.

_Fig. 1_

# ELECTRONIC COIN BOX, PARTICULARLY FOR PUBLIC TELEPHONE UTILITIES

This invention relates to an electronic coin box, particularly for public telephone utilities, for enabling, by means of different face value coins and tokens, generic pay stations.

Current telephone outlets for public use, operated by coins of different face values and tokens, are equipped with coin boxes having different slots for each face value of the coins and for tokens. This involves preliminary selection of the coins by the user and correct introduction of the same through the respective slots. The operation may be time consuming and liable to erroneous introduction of the coins, which would then be returned to the user causing added inconvenience and delay in enabling the telephone to be utilized.

This problem could be eliminated, for the benefit of the user, by providing the coin box with a single slot for the introduction of both different face value coins, and tokens.

However, the adoption of a single slot involves significant technical difficulties.

In fact, to retain the current coin box construction using multiple gathering raceways (each associated with a respective slot), it would be necessary to provide, downstream of a single slot replacing the various dedicated slots, a coin and token sorting system capable of recognizing, parting, and redirecting mechanically each coin and token to a respective gathering raceway. Approaches of this kind may prove unsatisfactory because they complicate the coin box construction excessively and are not adequately reliable.

The present invention is essentially directed to obviate such drawbacks, and has the important object of providing an improved coin box which adopts a single slot for the introduction of coins and tokens, while considerably simplifying the mechanical coin gathering system.

Another important object of this invention is to provide a coin box including suitable means for optimizing the coin accepting and returning procedures; this optimization being based on the notion of accepting coins and tokens by sorting them according to their number and face value so as to ensure the best (excess) correspondence between the available credit and matured debit; excess coins and tokens being returned.

A further object of this invention is to provide a coin box which can afford maximum reliability in operation and rule out the possibility of obstructions due to the complex mechanical construction of the coin boxes used heretofore.

To achieve these important objects, and more which will be apparent from the detailed description that follows, this invention has for its subject matter an improved electronic coin box, operated by coins of different face values and tokens, particularly for use with public telephone utilities, characterized in that it comprises a single slot for the introduction of coins with various face values and tokens communicating with a single gathering raceway and means of checking and sorting the coins and storing their spatial address in memory cells for deciding their acceptance or return.

Advantageously, the present coin box comprises electronic means of checking and sorting the introduced coins and operative to classify, in terms of storable information, the face value of each introduced coin; means of storing said face value information and the spatial address of the related coin within the gathering raceway (absolute address), and control means activated by said memory, through an acceptation optimizing program, operative to selectively supply discriminated acceptation and return pulses for each coin spotted by the related stored spatial address and sorted, for the purpose of acceptation or return, by said optimizing program on the basis of the closest rounding off between the available credit and matured debit.

Further features, objects and advantages of the present invention will be apparent from the following detailed description, with reference to the accompanying illustrative, but not limitative, drawings, where:

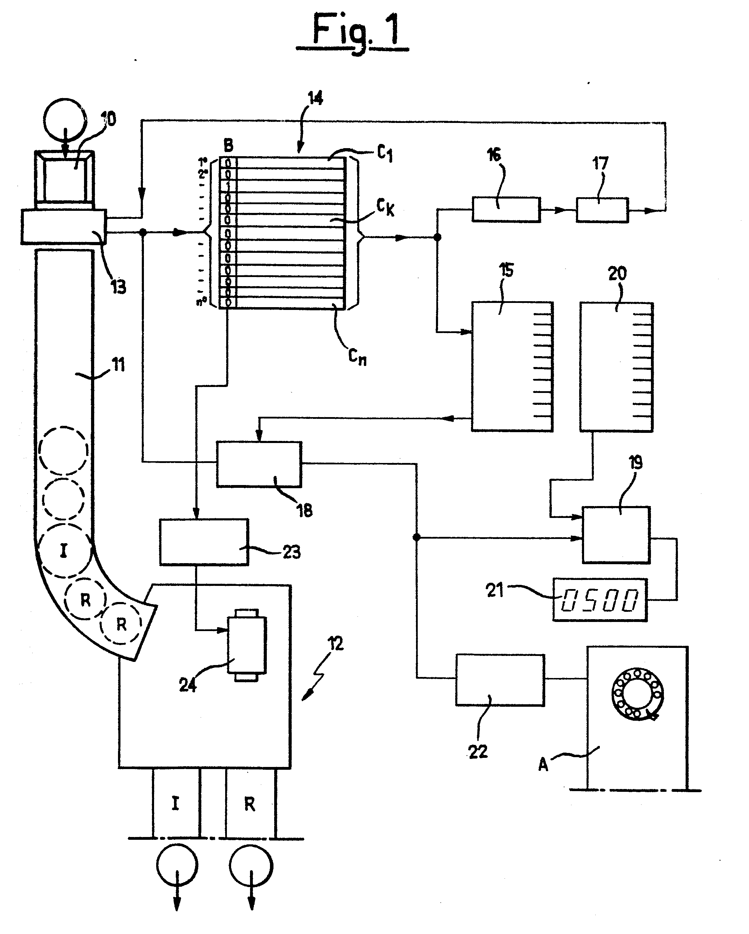

Figure 1 is a block diagram of the coin box and related electronic circuitry for its operation; and

Figure 2 is a schematic diagram of the means of storing information concerning the face value of each coin and its absolute address within the gathering raceway.

An electronic coin box according to the invention has a single slot 10 for the introduction of both different face value coins and tokens.

The slot 10 communicates with a single gathering raceway 11 which is terminated by a device 12 effecting the coin and token accepting or returning procedures as explained hereinafter. The device 12 is preferably of the type comprising a single electromagnet which is fed with pulses of different length, i.e. longer for collection and shorter for returning the unused coins or tokens (or viceversa). This system is able to allow selective restitution of single coins and for tokens. Between the slot 10 and gathering raceway 11 there is inserted an electronic sorter 13, known per se, which, by feeling the coins and tokens as they are introduced, provides dual information for each of them: a) validity of the coin (or token); b) face value thereof (for the purpose of the latter information item the token being treated like a coin of equivalent face value).

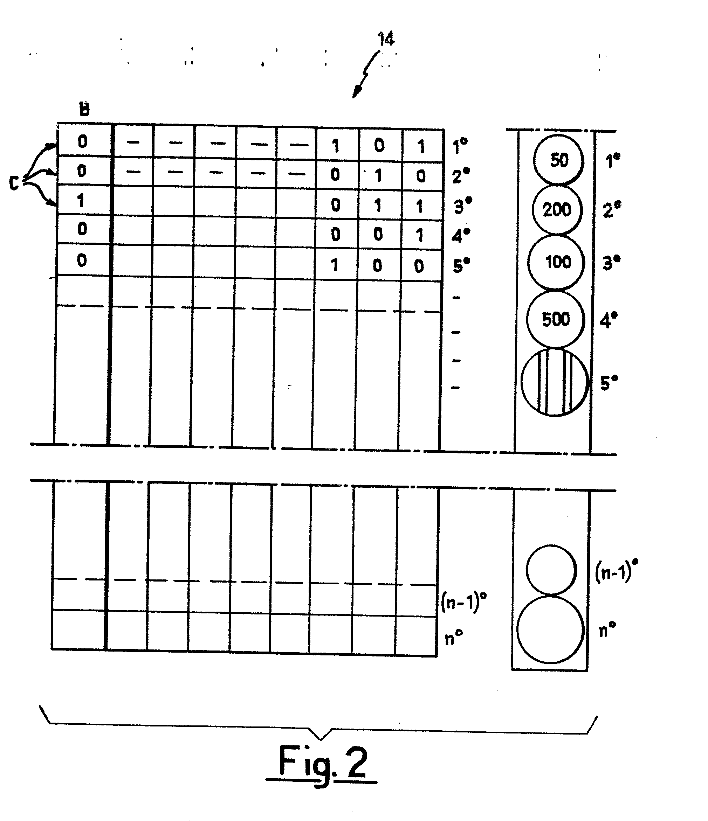

Information b) is of the storable type and is advantageously expressed by a binary code word, (byte), consisting of a preset number of binary levels (bits). The data is stored in a write-read memory (RAM) 14 which is structured, as shown in Figure 2, with a succession of "n" superimposed cells C each containing an eight-bit byte. The order numbers 1....n represent the absolute address of a cell whereat the byte identifying the related coin face value is stored.

The cell capacity is selected to exceed by at least one bit the significant byte and the excess bit, written in the column "B" of the memory, is utilized for the acceptation optimization procedure to be described hereinafter. In practice, using memories with standard cells of eight bits each, the significant byte will have seven bits which allow $2^7$ different coin types to be stored.

Furthermore, each coin is assigned a conventional value expressed in units referred to the greatest common multiple of the value of the coins accepted by the set. This conventional value is contained in a chart 15 programmed when manufacturing the set. By way of example only, shown herein below is a chart of said conventional values referring to current Italian coins and telephone tokens:

| Face value | Conventional value |
|---|---|
| 500 It.Lire | 10 units |
| 200 | 4 |
| 200 (token) | 4 |
| 100 | 2 |
| 50 | 1 |

The absolute address of the cells identifies the locations of the different coins and tokens inside the gathering raceway. Registered in the related memory cells will be the significant byte of the corresponding coin according to the diagram of Figure 2, wherein said significant byte is composed of three bits only adequate to discriminate the coins as per the preceding chart. The number "n" of coins corresponding to the "n" cells of address will be equal to the maximum capacity of the gathering raceway. On reaching that number acceptation of coins by the sorter 13 will be inhibited. A counter 16 and threshold circuit 17 supply the inhibition criterion to the sorter 13.

At each coin introduced, a second counter 18 updates, in terms of conventional units, the credit available to the user. A comparator 19, whereto a chart 20 containing the value of the greatest common multiple relating to the coins and/or pulses is connected, converts the credit expressed as conventional units, into monetary units (e.g. into Lire) and displays that credit on a display 21. If the coin introduced corresponds to an insufficient conventional unit to permit a telephone call to be made, the comparator 19 senses the occurrence and gives warning of it through the display 21, e.g. by flashing. A further threshold circuit 22 assesses the available credit and, if sufficient, outputs a gating criterion for the set A (in the example described, to enable the telephone dial disk to function). If the gathering raceway is full, even during the call an acceptation criterion is sent for the first coin introduced, upon the debit becoming equal to the value of the same and this for the purpose of allowing the user to introduce another coin.

An operating circuit 23 arranges for the production of the acceptation and return pulses which differ by their durations and act on an electromagnet 24 of the device 12, to convey the coins into an acceptation raceway I, or respectively return raceway R.

For the purpose of the production of the acceptation pulses the operating circuit 23 is responsive to the presence of a "1" bit in the column "B" of the memory 14 in the sense that the operating circuit 23, on sensing the presence of said "1" bit produces an acceptation pulse (of longer duration) for the
address of the cell $C_k$ for which said bit appears.
If the cell in question is, for example, the third,
the operating circuit 23 will first produce two
return pulses (of shorter duration) followed by an
acceptation pulse (of longer duration). Consequently
the device 12 will arrange for returning the first two
coins present in the raceway 11 and accepting the third.

The bits "B" are positioned at the "1" level by a
program of optimization of the acceptation which scans the
contents of the memory checking first the presence of the
higher face value coins once he receives a collection
command from a central unit whereto the telephone set is
connected. For this purpose the program utilizes both the
absolute address of the cells and the chart 15 of the conventional values. Once determination of the higher value
has been accomplished, the program makes the further check,

head coin value $\leq$ debit

and if this check is positive the program positions
the bit "B" of the address cell corresponding to the
head coin at the value "1" simultaneously decrementing
the debit by a corresponding value.

For the purpose of quantifying the "debit" -- in
the example described relating to the telephone
application -- it is expressed by the sum of the total
count pulses during the telephone call and suitably
stored. On hanging up the handset the existing credit/
debit situation is frozen to permit handling of the
stored data by the program.

The program continues in the manner previously

described until it arrives at the smallest value coin. At the end of the operating cycle the sum $\Sigma M$ of the coins sorted for acceptation, for which the program has positioned at "1" the related bit "B" shall have to be equal to the debit D, that is the condition

$$\Sigma M = D$$

shall have to be met.

If that condition is not met the program resets the bits "B" previously positioned at "1", increments by one conventional unit the debit and goes through the same handling cycle of the available credit.

While the above description makes reference to the application of the coin box to telephone outlets, the present invention can be applied to other apparatus, since the operation of the coin box is quite unrelated to the characteristics of the apparatus associated therewith.

As an example, the present coin box can be utilized for slot-machines, and for telematic apparatus, as those giving information related to hotels, exhibitions, state of roads, chemist's opened at the night and in holiday-days and so on, and all the system provided to allow transmission of data after the payment of the service.

Of course, within the principle of this invention, the embodiment details and embodiments may vary within broad limits from what has been described and illustrated by way of non-limitative example, without departing from the invention scope.

## CLAIMS

1. An improved electronic coin box, operated by coins of different face values and tokens, particularly for use with public telephone utilities, characterized in that it comprises a single slot (10) for the introduction of coins with various face values and tokens communicating with a single gathering raceway (11) and means (13,14) of checking and sorting the coins and storing their spatial address in memory cells ($C_k$) for deciding their acceptance or return.

2. An electronic coin box according to claim 1, characterized in that it comprises electronic means (13) of checking and sorting the coins introduced, capable of classifying, in terms of storable information, the face value of each coin introduced; means (14) of storing said face value and spatial address information belonging to each coin within the gathering raceway (11) and control means (23), activated by said memory through an acceptation optimizing program, adapted to selectively provide discriminated acceptation or return pulses for each coin identified by the related spatial address stored and sorted, for the purpose of acceptation or return, by said acceptation optimizing program.

3. An electronic coin box according to claim 1 or 2, characterized in that the information relating to the face value of the coins supplied by the checking and sorting means, is composed of a binary code word (byte) having a preset number of binary levels (bits).

4. An electronic coin box according to any one of claims 1 to 3, characterized in that said information relating to the coin face value is stored in corresponding write/read memory cells ($C_k$) and in that the address of each cell corresponds to the spatial position occupied by the related coin stored within the coin box gathering raceway.

5. An electronic coin box according to any one of the preceding claims, characterized in that each memory cell comprises a predeterminated number of bits storing the face value information and an excess bit providing a criterion of activation of the acceptation and return control means.

6. A coin box according to any one of the preceding claims, wherein the control means (23) for acceptation and return output an acceptation pulse for all the memory cells wherein the excess bit is positioned at a "1" level.

7. An electronic coin box according to any one of the preceding claims, wherein a prescheduled chart (15) of conventional values expressed in units referred to the greatest common multiple of the value of the coins accepted by the set is provided and wherein the acceptation count is performed in terms of said conventional units.

8. A coin box according to any one of the preceding claims, characterized in that it comprises means (16) of counting the coins introduced and means (21) of displaying the available credit to the user responsive to the minimum value of the credit required for enabling the set.

9. An electronic coin box according to any one of claims 5 to 8, characterized in that the excess bit which activates the accepting means is positioned at a "1" level in the related memory cell ($C_k$) by a program of acceptation optimization which scans the memory cells and enables the acceptation circuit to start from the greatest face value coins composing the credit on the basis of a criterion of maximum rounding off between the available credit and matured debit.

10. An electronic coin box operated by coins of different face value and tokens, comprising a single introduction slot (10) and single gathering raceway (11), electronic means (14) of storing the value of each coin and the related spatial address inside the gathering raceway and electronic means (23) of selectively producing the coin acceptation or return.

## Fig. 1

Fig. 2